# EUROPEAN PATENT APPLICATION

(11) **EP 3 166 264 A1**
(43) Date of publication of application: **10.05.2017**
(21) Application number: 14888855.5
(22) Date of filing: 21.10.2014
(51) Int. Cl.: H04L 12/717

(54) **ISIS-BASED ROUTING CALCULATION METHOD AND DEVICE**

(30) Priority: 01.07.2014 CN 201410311110
(71) Applicant: ZTE Corporation, Shenzhen, Guangdong 518057 (CN)
(72) Inventor: WU, Qiang, Shenzhen Guangdong 518057 (CN)
(74) Representative: Schröer, Gernot H.
(86) International application number: PCT/CN2014/089074
(87) International publication number: WO 2015/154420

(57) **Abstract**

The present invention discloses an Intermediate System to Intermediate System (ISIS)-based route computation method and apparatus. Herein, the method includes that: a route computation unit acquires a Link State Protocol Data Unit (LSP) packet from each Intermediate System (IS) of a network (S102); the route computation unit computes a route table of each IS according to the above-mentioned LSP packet, and sends the above-mentioned route table to each IS (S104). The problem in the existing technology that a route computation manner for an ISIS occupies considerable computation resources and is easily attacked is solved, the computation resources occupied by the route computation manner for the ISIS are reduced, and the opportunities of attacking the ISIS are reduced since it is unnecessary to perform mutual flooding and synchronization among various ISs and to save LSPs of other ISs, thereby improving the stability and reliability of a system.

## Description

### Technical Field

The present invention relates to the field of communications, and more particularly to an Intermediate System to Intermediate System (ISIS)-based route computation method and apparatus.

### Background

An ISIS is a dynamic link state-based Interior Gateway Protocol (IGP). After the ISIS protocol establishes a neighbor by means of hello packet interaction negotiation, each Intermediate System (IS) generates a Link State Protocol Data Unit (LSP) to describe link state information of the present IS and sends the link state information to a network, and LSPs sent by all IS devices on a network topology will also be stored to form a Link State DataBase (LSDB). The ISIS is an optimal route reaching a destination address computed by using the LSDB via a Shortest Path First (SPF).

Thus, each IS on the network needs to undertake functions of flooding, synchronization and saving of the LSP and route computation. A great number of computation resources are consumed, the network bandwidth is occupied, and network attacks such as LSP interception and modification of LSP flooding also exist, and abnormal route computation makes the network paralyzed or makes traffic sent to a destination specified by a hacker.

An effective solution has not been proposed yet for the problem in the existing technology that a route computation mode for an ISIS occupies considerable computation resources and is easily attacked.

### Summary of the Invention

Embodiments of the present invention provide an ISIS-based route computation method and apparatus, which are intended to at least solve the problem in the existing technology that a route computation mode for an ISIS occupies considerable computation resources and is easily attacked.

According to an embodiment of the present invention, an Intermediate System to Intermediate System ISIS-based route computation method is provided, which includes that: a route computation unit acquires a Link State Protocol Data Unit LSP packet from each IS of a network; and the route computation unit computes a route table of each IS according to the LSP packet, and sends the route table to each IS.

The LSP packet includes: next-hop information included in each neighbor ITEM of a neighbor Type, Length, Value TLV22 of the IS and needed by a neighbor.

The step that the route computation unit acquires an LSP packet from each IS of a network includes that: the route computation unit acquires the LSP packet from each IS, herein the LSP packet includes an IPv4 interface address sub-TLV and local interface information sub-TLV of the neighbor in each neighbor item of the neighbor TLV22 of the IS, the local interface information sub-TLV is arranged to describe egress interface information in the next-hop information reaching the neighbor, and the IPv4 interface address sub-TLV is arranged to describe gateway information in the next-hop information reaching the neighbor.

The IPv4 interface address sub-TLV includes a local IPv4 interface address arranged to forward data on an interface where the neighbor is located.

The local interface information sub-TLV includes a sub-TLV type and length, and an interface number of the interface where the neighbor is located.

Under a condition that the neighbor item is a point-to-point neighbor, the LSP packet further includes an IPv4 neighbor address sub-TLV of the point-to-point neighbor.

The IPv4 neighbor address sub-TLV of the neighbor includes an IPv4 interface address of the neighbor arranged to forward data on an interface where the neighbor is located.

According to a further embodiment of the present invention, an ISIS-based route computation apparatus is provided, which is located in a route computation unit, and includes: an acquisition module, arranged to acquire a Link State Protocol Data Unit LSP packet from each IS of a network; and a computation module, arranged to compute a route table of each IS according to the LSP packet, and send the route table to each IS.

The LSP packet includes: next-hop information included in each neighbor ITEM of a neighbor TLV22 of the IS and needed by the neighbor.

The acquisition module is further arranged to acquire the LSP packet from each IS, herein the LSP packet includes an IPv4 interface address sub-TLV and local interface information sub-TLV of the neighbor in each neighbor item of the neighbor TLV22 of the IS, the local interface information sub-TLV is arranged to describe egress interface information in the next-hop information reaching the neighbor, and the IPv4 interface address sub-TLV is arranged to describe gateway information in the next-hop information reaching the neighbor.

Under a condition that the neighbor item is a point-to-point neighbor, the LSP packet further includes an IPv4 neighbor address sub-TLV of the point-to-point neighbor.

The route computation unit is located on a part of ISs in all of the ISs, or the route computation unit is located in a preset route computation device.

By means of the embodiments of the present invention, the route computation unit acquires the LSP packet from each IS of the network; and the route computation unit computes the route table of each IS according to the LSP packet, and sends the route table to each IS. Therefore, the problem in the existing technology that the route computation mode for the ISIS occupies considerable computation resources and is easily attacked is solved, the computation resources occupied by the route computation mode for the ISIS are reduced, and the opportunities of attacking the ISIS are reduced since it is unnecessary to perform mutual flooding and synchronization among various ISs and to save LSPs of other ISs, thereby improving the stability and reliability of a system.

### Brief Description of Drawings

The accompanying drawings described herein are used to provide further understanding of the present invention, and form part of the present application. The schematic embodiments and their descriptions of the present invention are arranged to explain the present invention, and do not form improper limits to the present invention. In the accompanying drawings,
FIG. 1 is a flowchart of an ISIS-based route computation method according to an embodiment of the present invention.
FIG. 2 is a structure block diagram of an ISIS-based route computation apparatus according to an embodiment of the present invention.
FIG. 3 is a schematic diagram of a route computation unit located on an IS according to an embodiment 1 of the present invention.
FIG. 4 is a schematic diagram of a route computation unit located on a dedicated computer according to an embodiment 1 of the present invention.
FIG. 5 is a schematic diagram of an LSP generation situation of a broadcast link according to an embodiment 1 of the present invention.
FIG. 6 is a schematic diagram of an LSP generation situation of a point-to-point link according to an embodiment 1 of the present invention.

### Detailed Description

The present invention will be described in detail hereinbelow with reference to the accompanying drawings and in combination with the embodiments. It is important to note that the embodiments in the present application and the characteristics in the embodiments may be mutually combined without conflicts.

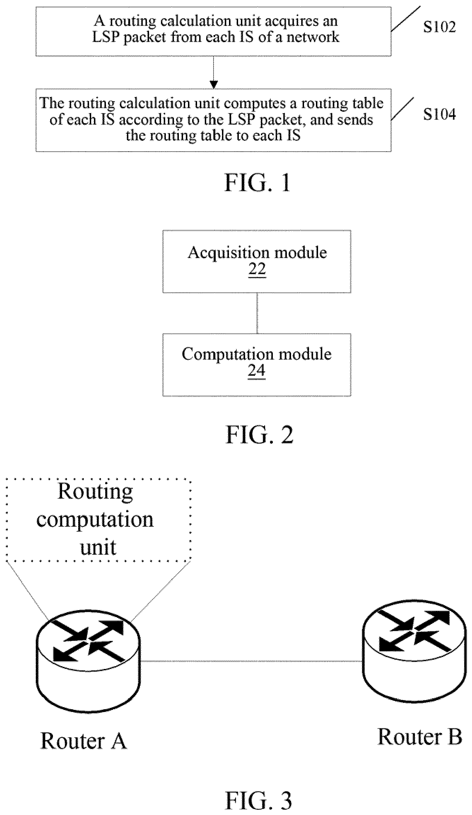

According to an embodiment of the present invention, an ISIS-based route computation method is provided. FIG. 1 is a flowchart of an ISIS-based route computation method according to an embodiment of the present invention. As shown in FIG. 1, the method includes the following steps.

In step S102: A route computation unit acquires an LSP packet from each IS of a network.

In step S104: The route computation unit computes a route table of each IS according to the LSP packet, and sends the route table to each IS.

In the present embodiment, by means of the above-mentioned steps, the route computation unit is added to the network, and the original route tables computed in all the ISs respectively are computed in the route computation unit in a unified manner. That is, the route computation unit acquires the LSP packet from each IS in the network, then computes the route table of each IS according to the LSP packet, and distributes the route table to each IS, thereby liberating resources for route computation operation in the ISs. Route computation is performed by the route computation unit in a unified mode, so the problem in the existing technology that the route computation mode for the ISIS occupies considerable computation resources and is easily attacked is solved, the computation resources occupied by the route computation manner for the ISIS are reduced, and the opportunities of attacking the ISIS are reduced since it is unnecessary to perform mutual flooding and synchronization among various ISs and to save LSPs of other ISs, thereby improving the stability and reliability of a system.

Since each IS self-computes the route table of the present IS in the existing technology, next-hop information needed for reaching a neighbor thereof may be conveniently obtained. When the route computation unit is used to compute the route table of each IS, the next-hop information may be acquired from each IS. In the present embodiment, the next-hop information needed by the neighbor is included in each neighbor item of a neighbor TLV22 carried in the LSP packet sent to the route computation unit from each IS.

A mode of carrying the next-hop information needed by the neighbor in the LSP packet may be: including an IPv4 interface address sub-TLV and local interface information sub-TLV of the neighbor in each neighbor item of the neighbor TLV22 of the IS in the LSP packet, herein the local interface information sub-TLV is arranged to describe egress interface information in the next-hop information reaching the neighbor, and the IPv4 interface address sub-TLV is arranged to describe gateway information in the next-hop information reaching the neighbor.

The IPv4 interface address sub-TLV includes a local IPv4 interface address arranged to forward data on an interface where the neighbor is located, and deletes usage limitation of that sub-TLV only to a TE in a protocol.

The local interface information sub-TLV is an newly added sub-TLV type in the present embodiment, includes an interface number of the interface where the neighbor is located, and further includes a sub-TLV type and length. In the present embodiment, the sub-TLV type of the local interface information sub-TLV may be 19.

Under the condition that the neighbor item is a point-to-point neighbor, the LSP packet further contains an IPv4 neighbor address sub-TLV of the point-to-point neighbor.

The IPv4 neighbor address sub-TLV includes an IPv4 interface address of the neighbor arranged to forward data on an interface where the neighbor is located, and deletes usage limitation of this sub-TLV only to the TE in the protocol.

In correspondence to the above-mentioned method, in the present embodiment, an ISIS-based route computation apparatus is also provided, which is located in a route computation unit. The apparatus is arranged to implement the above-mentioned embodiment and an alternative implementation mode. Those which have been described will not be elaborated. Just as a term 'module' used hereinbelow, the combination of software and/or hardware with predetermined functions may be implemented. Although the apparatus described by the embodiment below is better implemented by software, the implementation of hardware or the combination of software and hardware may be possible and conceived.

FIG. 2 is a structure block diagram of an ISIS-based route computation apparatus according to an embodiment of the present invention. As shown in FIG. 2, the apparatus includes an acquisition module 22 and a computation module 24. Each module will be described in detail hereinbelow.

The acquisition module 22 is arranged to acquire an LSP packet from each IS of a network. The computation module 24 is connected to the acquisition module 22 and arranged to compute a route table of each IS according to the LSP packet, and send the route table to each IS.

The LSP packet includes: next-hop information included in each neighbor ITEM of a neighbor TLV22 of the IS and needed by the neighbor.

The acquisition module 22 may be arranged to acquire the LSP packet from each IS, herein the LSP packet includes an IPv4 interface address sub-TLV and local interface information sub-TLV of the neighbor in each neighbor item of the neighbor TLV22 of the IS, the local interface information sub-TLV is arranged to describe egress interface information in the next-hop information reaching the neighbor, and the IPv4 interface address sub-TLV is arranged to describe gateway information in the next-hop information reaching the neighbor.

Under the condition that the neighbor item is a point-to-point neighbor, the LSP packet further includes an IPv4 neighbor address sub-TLV of the point-to-point neighbor.

The route computation unit may be located on a part of ISs in all of the ISs, or the route computation unit may also be located in a preset route computation device. For example, one or more dedicated computers may be set as the route computation unit.

Alternative embodiments in combination with the above-mentioned embodiment and the alternative implementation mode thereof will be adopted to make descriptions hereinbelow.

In a method and system for supporting distributed route computation via an ISIS protocol in the following alternative embodiment, herein the distributed route computation is completed by a route computation unit separately, the route computation unit may be located on an own device, other devices on a network, or a computer dedicated to route computation. The route computation unit obtains LSP database information from an IS on the network, and provides topological computation and route computation of the ISIS protocol for the IS. The IS on the network does not need to perform LSP flooding and synchronization, does not need to save and process LSPs of other ISs, does not need to perform topological computation and route computation, and only needs to acquire an own route table from the route computation unit to forward a data package. In the mode, the IS does not need to synchronize an LSP database, thereby greatly relieving network burdens caused by database synchronization, and reducing occupation of user bandwidth. The IS does not need to synchronize the LSP database, does not need to save and process the LSPs of other ISs, and does not need to perform topological computation and Partial Route Computation (PRC), thereby greatly relieving the working burdens and resources of the IS. The IS only specializes forwarding of the data package, thereby greatly improving the forwarding performance of the IS. Meanwhile, the data packet of the LSP does not need to synchronize the database on the network, thereby shielding potential network safety hazards such as LSP packet interception and modification.

The system in the alternative embodiment below includes: an original IS and the route computation unit.

The original IS does not perform LSP flooding and synchronization, does not perform route computation, sends an LSP generated by itself to the route computation unit, and does not save and process LSPs of other ISs.

The route computation unit is a device dedicated to the route computation, may be located on an IS, or may be located on a dedicated route computer. The route computation unit obtains LSP database information from the IS on the network, provides topological computation and route computation of the ISIS protocol for each IS, and sends a route table to the corresponding IS.

A neighbor information description format (RFC5305) of a neighbor TLV22 under a wide flux of a existing protocol is kept. Sub-TLVs, namely an IPv4 interface address sub-TLV and an IPv4 neighbor address sub-TLV, of two neighbors TLV22 in the RFC5305 are introduced. The functional limitation thereof only to a TE is eliminated, and it may also be used in route computation. A new sub-TLV of the neighbor TLV22 is proposed, a type of an interface information sub-TLV is 19. A format is as described herein.

The IS fills in the neighbor description information and sub-TLV of the neighbor TLV22 in accordance with descriptions herein, and fills in the recently proposed interface information sub-TLV.

The route computation unit performs topological computation and PRC in accordance with a mode described herein. In topological computation, next-hop information is obtained from the sub-TLV of neighbor description information of the neighbor TLV22, that is, an egress interface of a next hop is acquired from the interface information sub-TLV, and gateway information of the next hop is acquired from the IPv4 interface address sub-TLV or the IPv4 neighbor address sub-TLV.

A network device for running an ISIS route protocol and a network device for independently performing route computation in the alternative embodiment below support distributed route computation for the ISIS protocol, and are applied to various ISIS-supporting devices and devices for providing route computation for the ISIS. For example, the devices may include a router, a switch, and a computer host.

The alternative embodiment may provide a distributed route computation method and system with an independent ISIS route computation function, and a route computation unit (device) specially undertakes the route computation function for each IS.

The IS on the network fills in neighbor information in accordance with a neighbor fill-in method for a TLV22 in an LSP in the embodiment of the present invention. Sub-TLVs, namely an IPv4 interface address sub-TLV and an IPv4 neighbor address sub-TLV, of two TLV22 in the RFC5305 are introduced. Moreover, the type of a new interface information sub-TLV in the embodiment of the present invention is 19, and the generated LSP is sent to the route computation unit.

The route computation unit receives LSPs sent by all ISs, and performs route computation on each IS, namely topological computation and PRC. An SPF algorithm is still executed in the topological computation, next-hop information is acquired from the sub-TLV of the TLV22, and next-hop information from the present IS to other ISs is computed. Then, the PRC is performed, that is, the next-hop reaching the other ISs is copied into next-hop information of IP accessibility information carried therein, to complete the route computation. Finally, a route table corresponding to each of the ISs is sent to this IS, and this IS may use the route table to forward a data package.

The method for supporting distributed route computation via an ISIS protocol in the present alternative embodiment has the following advantages.
(1) Network loads are reduced: the present method does not need to perform LSP flooding and synchronization on the network, thereby reducing the network loads.
(2) IS working burdens and resources are released: the IS does not need to perform LSP flooding and synchronization, does not need to process and save LSPs of other ISs, and does not need to perform route computation, thereby greatly relieving the IS working burdens and resources.
(3) IS forwarding performances are improved: the IS does not need to perform LSP flooding and synchronization, does not need to perform route computation, and is dedicated to forwarding of the data packet, thereby greatly improving the data forwarding performances of a router (switch).
(4) Network safety is satisfied: the LSP does not need to perform flooding and synchronization on the network, thereby eliminating network attacks from means such as LSP interception and modification.

The present alternative embodiment will be further described hereinbelow in combination with the specific implementation mode.

### Embodiment 1

A route computation unit is a device dedicated to the route computation, may be located on an IS, or may be located on a dedicated route computer. When a link state of the IS changes, an LSP packet will be generated, so the generated LSP packet is sent to an independent computation unit. So, the route computation unit saves LSPs of all ISs on a network, the route computation unit performs route computation according to these LSPs and sends a route computation result to a router, and the router may forward a data packet according to these pieces of route information.

A system running mode includes the following two modes.

The system running mode describes, in detail, running modes under two scenarios where the route computation unit is located on the IS and is located on the dedicated route computer. Certainly, the method and system for distributed route computation described herein are not limited to setting in these scenarios, the core being that route computation is separated from the IS and completed by the route computation unit.

### 1. Running mode in a scenario where the route computation unit is located on the IS:

FIG. 3 is a schematic diagram of a route computation unit located on an IS according to an embodiment 1 of the present invention. As shown in FIG. 3, the route computation unit is located on an IS. On a network consisting of a router A and a router B, the route computation unit is located on the router A, that is, the router A undertakes the route computation unit. After generating LSPs, the router A will send all of the LSPs generated by itself to the route computation unit located on a device thereof. The router B will send LSPs generated by itself to the route computation unit of the router A by means of a special channel, a flooding mode or other modes. So, the route computation unit located on the router A will perform route computation on each IS according to the LSPs generated by all IS routers A and routers B on the network. Then, a computation result route table of a corresponding IS is sent to the IS: a route table for computation of the router A is sent to the router A and a route table for computation of the router B is sent to the router B. Finally, the router A and the router B possess the respectively corresponding route tables, and forward data packet according to the route tables.

### 2. Running mode in a scenario where the route computation unit is located on the dedicated computer:

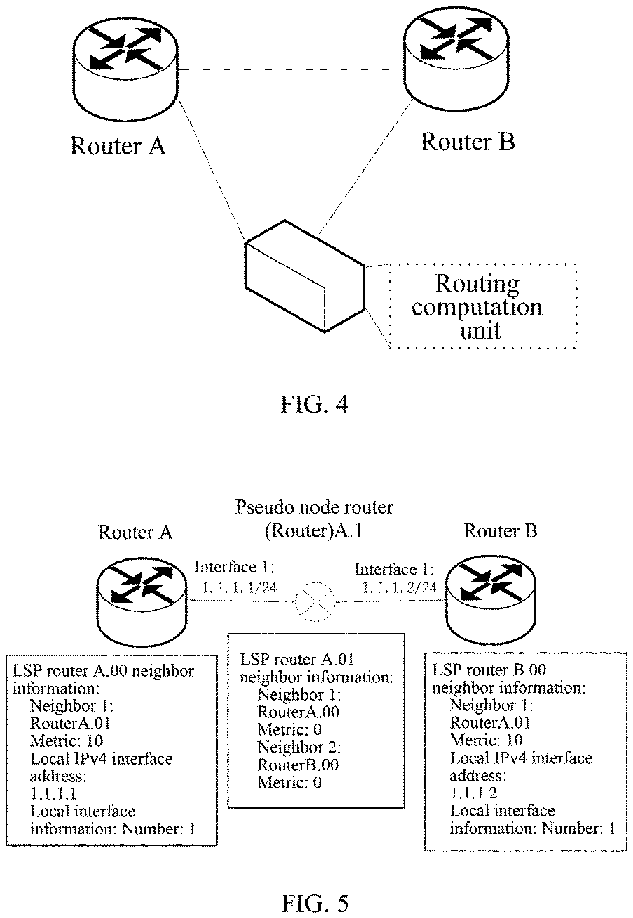

FIG. 4 is a schematic diagram of a route computation unit located on a dedicated computer according to an embodiment 1 of the present invention. As shown in FIG. 4, the running mode when the route computation unit is located on a dedicated computer. On a network consisting of a router A and a router B, the route computation unit is located on a computer dedicated to route computation. After generating LSPs, the router A will send all of the LSPs generated by itself to the route computation unit located on the computer by means of a special channel or other modes. The router B will also send LSPs generated by itself to the route computation unit located on the computer by means of a special channel or other modes. So, the route computation unit located on a dedicated host will perform route computation on each IS according to the LSPs generated by all IS routers A and routers B on the network. Then, a computation result route table of a corresponding IS is sent to the IS: a route table for computation of the router A is sent to the router A and a route table for computation of the router B is sent to the router B. Finally, the router A and the router B possess the respectively corresponding route tables, and forward data packages according to the route tables.

### Route computation method:

The route computation unit performs route computation according to the LSPs obtained from all ISs on the network, and needs to execute topological computation and PRC. The topological computation and the PRC are performed still according to the original method: as for the topological computation, an SPF algorithm is used to compute next-hop information from the present IS to each IS firstly, the next-hop information mainly including: egress interface information of a next hop and gateway information of a next hop. As for the PRC, according to an IS to which a route prefix is attached, the next-hop information reaching the IS is copied to form own next-hop information.

However, each IS self-executes the topological computation and the PRC originally, and computes a route table needed by itself. In the topological computation, the topological computation is performed according to a neighbor TLV in the LSP. Meanwhile, computation of the next-hop information in the topological computation refers to acquisition from the corresponding neighbor on a boot interface of each IS. The execution of route computation via the route computation unit described in the present alternative embodiment is not performed in the present IS. Therefore, the next-hop information needed by the neighbor may be carried in the LSP. So, next-hop information needed by the neighbor may be carried in LSP. Thus, the route computation unit may compute a next hop.

The expansion of the ISIS protocol and the whole process of route computation are elaborated hereinbelow, and two link types namely a broadcast link and a point-to-point link are divided in the ISIS protocol.

### 1. Protocol expansion:

### (1) Original protocol packet format:

As shown in Table 1, under the condition of a wide flux, the RFC5305 describes that a neighbor information format in a neighbor TLV22 of an original LSP includes: a 7-byte system Id and pseudo node number, 3-byte metric information, a 1-byte sub-TLV length, and a sub-TLV of 0 to 244 bytes.

The neighbor information may include two important sub-TLVs, see RFC5305 for details: an IPv4 address sub-TLV and an IPv4 neighbor address sub-TLV which are used only in a TE function currently, and cannot be used in route computation.

**Table 1: Neighbor information format in neighbor TLV22 according to embodiment 1 of the present invention**

| |
|---|
| Neighbor system-id (6 bytes) and pseudo node number (1 byte) |
| metric (3 bytes) |
| Sub-TLV length (1 byte) |

### (2) Protocol packet format modification:

The neighbor information format of the neighbor TLV22 of the LSP and the sub-TLV thereof under the condition of the wide flux are modified and expanded hereinbelow.
(1) The neighbor TLV information still keeps an original format (as shown in Table 1): a 7-byte system Id and pseudo node number, 3-byte metric information, and a 1-byte sub-TLV length, and the information may carry a sub-TLV of 0-244 bytes thereafter.
(2) An IPv4 address sub-TLV and an IPv4 neighbor address sub-TLV in RFC5305 are introduced (see RFC5305 for details): usage limitation of an original protocol only in the TE function is eliminated, it is modified herein that the original protocol may also be used in route computation, and it is arranged to acquire gateway information in the next-hop information. The IPv4 address sub-TLV fills in a local IPv4 interface address which may be arranged to forward data on an interface where the present neighbor is located. The IPv4 neighbor address sub-TLV fills in a neighbor IS IPv4 interface address which may be arranged to forward data on the interface where the present neighbor is located.
(3) A new sub-TLV namely a local interface information sub-TLV is proposed. Table 2 is a format of the local interface information sub-TLV according to the embodiment 1 of the present invention. The format is as follows. The type of the sub-TLV is 19, and a 1-byte IS interface number is contained. It is arranged to acquire outbound interface information in next-hop information. The interface information sub-TLV fills in an interface number of the interface where the present neighbor is located.

**Table 2: Format of the local interface information sub-TLV according to the embodiment 1 of the present invention**

| |
|---|
| Sub-TLV type (1 byte) 19 |
| Length (1 byte) |
| Interface number: (1 byte) |

### 2. Broadcast link related protocol expansion and route computation

FIG. 5 is a schematic diagram of an LSP generation situation of a broadcast link according to an embodiment 1 of the present invention. As shown in FIG. 5, on a broadcast link, a neighbor of a broadcast network is established via an interface of which an interface number is 1 and an interface Ipv4 address is 1.1.1.1/24 on a router A and an interface of which an interface number is 1 and an interface Ipv4 address is 1.1.1.2/24 on a router B. Suppose a system-id of the router A is 1111.1111.1111, a system-id of the router B is 2222.2222.2222 and the interface 1 of the router A is a DIS elected by the present broadcast network, a pseudo node router A.1 will be created.

### (1) Broadcast link protocol expansion

On the above topology, the LSP generation situation is as follows.

A neighbor in an LSP generated by the router A is 1111.1111.1111.01 (router A.01), metric is 10 in default, two sub-TLVs namely an IPv4 interface address sub-TLV and an interface information sub-TLV are carried under this neighbor, a local Ipv4 interface address of the IPv4 interface address sub-TLV is 1.1.1.1, and a fill-in interface number of the interface information sub-TLV is 1.

A neighbor in an LSP generated by the router B is 1111.1111.1111.01 (router A.01), metric is 10 in default, two sub-TLVs namely an IPv4 interface address sub-TLV and an interface information sub-TLV are carried under this neighbor, a local Ipv4 interface address of the IPv4 interface address sub-TLV is 1.1.1.2, and a fill-in interface number of the interface information sub-TLV is 1.

In the LSP generated by the router A.1 pseudo node, identical to the generation content of the conventional protocol, there are two neighbors: one is 1111.1111.1111.00 (router A.00), metric is 0; and the other one is 2222.2222.2222.00 (router B.00), metric is 0.

### (2) Broadcast link route computation

After receiving the LSPs generated by the router A, the router B and the router A.01, the route computation unit will perform route computation, namely topological computation and PRC, on the router A and the router B.

The route computation unit performs route computation on the router A. Firstly, an SPF algorithm is executed to perform the topological computation, it is finally discovered that next-hop information reaching the router B is an outbound interface 1 of the router A, a next-hop gateway is 1.1.1.2, the next-hop egress interface is acquired from an interface sub-TLV of which the neighbor is the router A.01 in the LSP of the router A, and the next-hop gateway is acquired from an interface of which the neighbor is the router A.01 and a local Ipv4 interface address is 1.1.1.2 in the LSP of the router B. So, IP accessibility information on the router B forms next-hop information of the IP accessibility information by copying the next-hop information reaching the router B, and the route computation is ended. Finally, the route computation unit will send route information of the router A to the router A, and the router A will perform route forwarding by using a route table thereof.

Likewise, the route computation unit performs route computation on the router B. Firstly, the SPF algorithm is executed to perform the topological computation, it is finally discovered that next-hop information reaching the router A is an egress interface 1 of the router B, a next-hop gateway is 1.1.1.1, the next-hop outbound interface is acquired from an interface sub-TLV of which the neighbor is the router A.01 in the LSP of the router B, and the next-hop gateway is acquired from an interface of which the neighbor is the router A.01 and a local Ipv4 interface address is 1.1.1.1 in the LSP of the router A. So, IP accessibility information on the router A forms next-hop information of the IP accessibility information by copying the next-hop information reaching the router A, and the route computation is ended. Finally, the route computation unit will send route information of the router B to the router B, and the router B will perform route forwarding by using a route table thereof.

### 3. Point-to-point link related protocol expansion and route computation

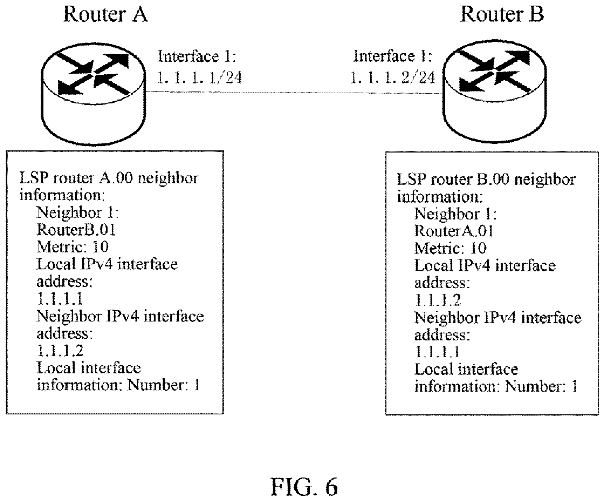

FIG. 6 is a schematic diagram of an LSP generation situation of a point-to-point link according to an embodiment 1 of the present invention. As shown in FIG. 6, on a point-to-point link, a neighbor of a broadcast network is established via an interface of which an interface number is 1 and an interface Ipv4 address is 1.1.1.1/24 on a router A and an interface of which an interface number is 1 and an interface Ipv4 address is 1.1.1.2/24 on a router B. It is supposed that a system-id of the router A is 1111.1111.1111 and a system-id of the router B is 2222.2222.2222.

### (1) Point-to-point link protocol expansion

A neighbor in an LSP generated by the router A is 2222.2222.2222.00 (router A.01), metric is 10 in default, three sub-TLVs namely an IPv4 interface address sub-TLV, an IPv4 neighbor address sub-TLV and an interface information sub-TLV are carried under this neighbor, a local Ipv4 interface address of the IPv4 interface address sub-TLV is 1.1.1.1, a local Ipv4 interface address of the IPv4 neighbor address sub-TLV is 1.1.1.2, and a fill-in interface number of the interface information sub-TLV is 1.

A neighbor in an LSP generated by the router B is 1111.1111.1111.01 (router A.01), metric is 10 in default, three sub-TLVs namely an IPv4 interface address sub-TLV, an IPv4 neighbor address sub-TLV and an interface information sub-TLV are carried under this neighbor, a local Ipv4 interface address of the IPv4 interface address sub-TLV is 1.1.1.1, a local Ipv4 interface address of the IPv4 neighbor address sub-TLV is 1.1.1.2, and a fill-in interface number of the interface information sub-TLV is 1.

### (2) Point-to-point link route computation

After receiving the LSPs generated by the router A and the router B, the route computation unit will perform route computation, namely topological computation and PRC, on the router A and the router B.

The route computation unit performs route computation on the router A. Firstly, an SPF algorithm is executed to perform the topological computation, it is finally discovered that next-hop information reaching the router B is an egress interface 1 of the router A, a next-hop gateway is 1.1.1.2, the next-hop outbound interface is acquired from an interface sub-TLV of which the neighbor is the router B.00 in the LSP of the router A, and the next-hop gateway is acquired from an interface of which the neighbor is the router A.00 and a local Ipv4 interface address is 1.1.1.2 in the LSP of the router B. However, before the gateway Ipv4 address is acquired, it must be confirmed that: a local Ipv4 interface address of the interface of which the neighbor is the router B.00 in the LSP of the router A is 1.1.1.1, and a neighbor Ipv4 interface address of the interface of which the neighbor is the router A.00 in the LSP of the router B is 1.1.1.1, these two Ipv4 addresses are equal, and it is actually confirmed that these two pieces of point-to-point neighbor description information are located on an identical point-to-point link. So, IP accessibility information on the router B forms next-hop information of the IP accessibility information by copying the next-hop information reaching the router B, and the route computation is ended. Finally, the route computation unit will send route information of the router A to the router A, and the router A will perform route forwarding by using a route table thereof

The route computation unit performs route computation on the router B. Firstly, the SPF algorithm is executed to perform the topological computation, it is finally discovered that next-hop information reaching the router A is an outbound interface 1 of the router B, a next-hop gateway is 1.1.1.1, the next-hop egress interface is acquired as 1 from an interface sub-TLV of which the neighbor is the router A.00 in the LSP of the router B, and the next-hop gateway is acquired from an interface of which the neighbor is the router B.00 and a local Ipv4 interface address is 1.1.1.1 in the LSP of the router A. However, before the gateway Ipv4 address is acquired, it must be confirmed that: a local Ipv4 interface address of the interface of which the neighbor is the router A.00 in the LSP of the router B is 1.1.1.2, and a neighbor Ipv4 interface address of the interface of which the neighbor is the router B.00 in the LSP of the router A is 1.1.1.2, these two Ipv4 addresses are equal, and it is actually confirmed that these two pieces of point-to-point neighbor description information are located on an identical point-to-point link. So, IP accessibility information on the router A forms next-hop information of the IP accessibility information by copying the next-hop information reaching the router A, and the route computation is ended. Finally, the route computation unit will send route information of the router B to the router B, and the router B will perform route forwarding by using a route table thereof.

In a further embodiment, software is also provided. The software is arranged to execute the technical solutions described in the above-mentioned embodiments and the alternative embodiments.

In a further embodiment, a storage medium is also provided. The above-mentioned software is stored in the storage medium. The storage medium includes, but is not limited to, an optical disk, a floppy disk, a hard disk, an erasable memory and the like.

Obviously, those skilled in the art should understand that the above-mentioned all modules or all steps in the present invention may be implemented by using a general computation apparatus, may be centralized on a single computation apparatus or may be distributed on a network composed of a plurality of computation apparatuses. Alternatively, they may be implemented by using executable program codes of the computation apparatuses. Thus, they may be stored in a storage apparatus and executed by the computation apparatuses, the shown or described steps may be executed in a sequence different from this sequence under certain conditions, or they are manufactured into each integrated circuit module respectively, or a plurality of modules or steps therein is manufactured into a single integrated circuit module. Thus, the present invention is not limited to a combination of any specific hardware and software.

The above is only the alternative embodiments of the present invention, and is not used to limit the present invention. There may be various modifications and variations in the present invention for those skilled in the art. Any modifications, equivalent replacements, improvements and the like within the spirit and principle of the present invention shall fall within the protective scope of the present invention.

### Industrial Applicability

As above, the ISIS-based route computation method and apparatus provided by the embodiments of the present invention have the following beneficial effects. The problem in the existing technology that the route computation manner for the ISIS occupies considerable computation resources and is easily attacked is solved, the computation resources occupied by the route computation manner for the ISIS are reduced, and the opportunities of attacking the ISIS are reduced since it is unnecessary to perform mutual flooding and synchronization among various ISs and to save LSPs of other ISs, thereby improving the stability and reliability of the system.

## Claims

1. An Intermediate System to Intermediate System ISIS-based route computation method, comprising:
acquiring, by a route computation unit, a Link State Protocol Data Unit LSP packet from each Intermediate System IS of a network; and
computing, by the route computation unit, a route table of each IS according to the LSP packet, and sending the route table to each IS.

2. The method according to claim 1, wherein the LSP packet comprises: next-hop information comprised in each neighbor ITEM of a neighbor Type, Length, Value TLV22 of the IS and needed by the neighbor.

3. The method according to claim 2, wherein acquiring, by the route computation unit, an LSP packet from each IS of a network comprises:
acquiring, by the route computation unit, the LSP packet from each IS, wherein the LSP packet includes an IPv4 interface address sub-TLV and local interface information sub-TLV of the neighbor in each neighbor item of the neighbor TLV22 of the IS, the local interface information sub-TLV is arranged to describe egress interface information in the next-hop information reaching the neighbor, and the IPv4 interface address sub-TLV is arranged to describe gateway information in the next-hop information reaching the neighbor.

4. The method according to claim 3, wherein
the IPv4 interface address sub-TLV comprises a local IPv4 interface address arranged to forward data on an interface where the neighbor is located.

5. The method according to claim 3, wherein
the local interface information sub-TLV comprises a sub-TLV type and length, and an interface number of the interface where the neighbor is located.

6. The method according to claim 3, wherein under the condition that the neighbor item is a point-to-point neighbor, the LSP packet further comprises an IPv4 neighbor address sub-TLV of the point-to-point neighbor.

7. The method according to claim 6, wherein the IPv4 neighbor address sub-TLV of the neighbor comprises an IPv4 interface address of the neighbor arranged to forward data on an interface where the neighbor is located.

8. An Intermediate System to Intermediate System ISIS-based route computation apparatus, located in a route computation unit, the apparatus comprising:
an acquisition module, arranged to acquire a Link State Protocol Data Unit LSP packet from each Intermediate System IS of a network; and
a computation module, arranged to compute a route table of each IS according to the LSP packet, and send the route table to each IS.

9. The apparatus according to claim 8, wherein the LSP packet comprises: next-hop information comprises in each neighbor ITEM of a neighbor Type, Length, Value TLV22 of the IS and needed by the neighbor.

10. The apparatus according to claim 9, wherein the acquisition module is further arranged to acquire the LSP packet from each IS, wherein the LSP packet comprises an IPv4 interface address sub-TLV and local interface information sub-TLV of the neighbor in each neighbor item of the neighbor TLV22 of the IS, the local interface information sub-TLV is arranged to describe outbound interface information in the next-hop information reaching the neighbor, and the IPv4 interface address sub-TLV is arranged to describe gateway information in the next-hop information reaching the neighbor.

11. The apparatus according to claim 10, wherein under a condition that the neighbor item is a point-to-point neighbor, the LSP packet further comprises an IPv4 neighbor address sub-TLV of the point-to-point neighbor.

12. The apparatus according to any one of claims 8 to 11, wherein
the route computation unit is located on a part of ISs in all of the ISs; or
the route computation unit is located in a preset route computation device.
